(19) Europäisches Patentamt
European Patent Office
Office européen des brevets

(11) **EP 2 842 223 B1**

(12) **FASCICULE DE BREVET EUROPEEN**

(45) Date de publication et mention
de la délivrance du brevet:
**13.07.2016 Bulletin 2016/28**

(21) Numéro de dépôt: **13720489.7**

(22) Date de dépôt: **19.04.2013**

(51) Int Cl.:
*H02M 7/217* (2006.01)  *H02M 1/42* (2007.01)
*H02M 3/158* (2006.01)  *H02J 7/04* (2006.01)
*H02J 7/02* (2006.01)  *H02J 7/00* (2006.01)
*B60L 11/18* (2006.01)  *H02M 1/00* (2006.01)

(86) Numéro de dépôt international:
**PCT/FR2013/050869**

(87) Numéro de publication internationale:
**WO 2013/160593 (31.10.2013 Gazette 2013/44)**

(54) **PROCEDE DE COMMANDE DE CHARGE D'UNE BATTERIE**

VERFAHREN ZUR STEUERUNG DER BATTERIELADUNG

METHOD OF CONTROLLING CHARGE OF A BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.04.2012 FR 1253896**
**01.06.2012 US 201261654380 P**

(43) Date de publication de la demande:
**04.03.2015 Bulletin 2015/10**

(73) Titulaire: **Renault S.A.S.**
**92100 Boulogne-Billancourt (FR)**

(72) Inventeurs:
• **KVIESKA, Pedro**
**F-78000 Versailles (FR)**
• **MERIENNE, Ludovic**
**F-91190 Gif Sur Yvette (FR)**

(56) Documents cités:
**EP-A1- 2 365 620  FR-A1- 2 943 188**
**FR-A1- 2 964 510**

**Description**

L'invention concerne un dispositif de charge d'une batterie haute tension, notamment d'un véhicule automobile à traction électrique, à partir d'un réseau d'alimentation monophasé.

Dans des systèmes de recharge de batterie à haute tension, la puissance électrique du réseau est amenée à la batterie successivement au travers de deux convertisseurs : un abaisseur de tension (« buck ») et un élévateur de tension (« boost »). Ces deux convertisseurs permettent respectivement d'abaisser et d'élever le rapport de tension entre leur borne de sortie et leur borne d'entrée, en ouvrant et en fermant successivement une série d'interrupteurs, à une fréquence qui est commandée en fonction du courant de sortie, et/ou de la tension de sortie souhaitée.

De tels systèmes de recharge sont par exemple décrits dans la demande de brevet FR 2 943 188, qui porte sur un système de recharge embarqué pour véhicule automobile, permettant un rechargement à partir d'un circuit triphasé ou monophasé d'une batterie du véhicule. Le circuit de recharge intègre les bobines d'une machine électrique qui assure par ailleurs d'autres fonctions comme la génération de courant ou la propulsion du véhicule. Le préambule de la revendication 1 est basé sur ce document.

Le hachage du courant prélevé à partir du réseau d'alimentation induit des composantes à haute fréquence dans le courant prélevé, c'est-à-dire des harmoniques d'ordre supérieur au fondamental du réseau de distribution qui est classiquement à 50 Hz.

Le distributeur d'électricité imposant une norme sur les harmoniques du courant prélevé, un tel système de recharge comporte également un filtre de type RLC (Résistif-Inductif-Capacitif) à l'entrée de l'abaisseur de tension. Ce filtre induit un déphasage entre le courant et la tension prélevés sur le réseau. Ce déphasage implique une puissance réactive transitant par le réseau, mais non prélevée par l'utilisateur, et que l'on cherche également à minimiser.

Par ailleurs, les réseaux d'alimentation domestiques sont principalement des réseaux d'alimentation monophasés. Un véhicule comprenant un dispositif de recharge de batterie à partir d'une alimentation monophasée peut ainsi être rechargé sur un réseau d'alimentation domestique, par exemple, dans le garage ou le parking d'un particulier.

Une recharge à partir d'un réseau d'alimentation monophasé présente quelques spécificités.

En fonction de sa topologie, il n'est pas possible de mettre en phase le courant d'entrée à la tension du réseau. De plus, lorsque la tension sinusoïdale d'entrée avoisine zéro, le système devient momentanément non commandable. Par ailleurs, pour que le flux de puissance puisse s'établir de façon continue, un courant non nul doit circuler dans l'inductance de stockage de la machine électrique entre l'abaisseur de tension et l'élévateur de tension. Il se pose alors le problème de la valeur du courant traversant l'inductance lors des phases de non commandabilité du système. En effet, au cours de ces phases, on ne peut pas commander notamment le courant traversant l'inductance.

Une solution serait d'utiliser une inductance de stockage élevée pour que le courant dans l'inductance n'ait pas le temps de chuter vers une valeur nulle. Cela étant, cette solution présente l'inconvénient d'un volume important de cette inductance.

Au vu de ce qui précède, un but de l'invention est de proposer un procédé de charge d'une batterie qui permette de résoudre au moins en partie les inconvénients mentionnés ci-dessus.

En particulier, l'objectif de l'invention est de proposer un procédé de charge permettant d'éviter le passage par zéro de la valeur du courant traversant l'inductance de la machine électrique.

Un but de l'invention est également d'augmenter le rendement énergétique des systèmes de charge.

Un autre but de l'invention est de proposer un procédé de charge qui ne nécessite pas une inductance de valeur élevée.

Ainsi ces buts et objectifs sont atteints par le procédé selon la revendication 1. Des modes de réalisation de l'invention sont spécifiés dans les revendications dépendantes. Il est proposé un procédé de commande de charge d'une batterie, notamment d'une batterie d'un véhicule automobile, à partir d'un réseau monophasé, dans lequel :

- on filtre la tension d'entrée;
- on amène la puissance électrique du réseau à la batterie via un étage abaisseur de tension et un étage élévateur de tension couplés ensemble via un composant inductif ; et
- on contrôle une intensité traversant ledit composant inductif en fonction d'une consigne d'intensité, ladite intensité n'étant pas continûment commandable.

Selon une caractéristique générale de ce procédé, on élabore la consigne d'intensité de manière que ladite consigne d'intensité ait au moins une première valeur et au moins une deuxième valeur supérieure à la première valeur, la consigne d'intensité ayant la deuxième valeur avant le début d'une phase au cours de laquelle l'intensité n'est pas commandable.

Lors des phases au cours desquelles le courant n'est pas commandable également appelées phases de non commandabilité, l'intensité traversant le composant inductif ne peut que décroître. Ainsi, en choisissant une deuxième valeur de consigne suffisamment importante, on évite que l'intensité traversant le composant inductif n'atteigne la valeur nulle qui est à éviter. D'autre part, étant donné que la consigne prend la première valeur en dehors des phases de non commandabilité, la valeur moyenne de l'intensité traversant le composant inductif est fortement diminuée par rapport par exemple à une consigne constante prenant la deuxième valeur. Le rendement énergétique de la recharge est donc amélioré.

Selon un mode de mise en oeuvre, on élabore la consigne d'intensité de manière que ladite consigne ait une troisième valeur, inférieure aux deux premières valeurs, la consigne passant de la deuxième à la troisième valeur lors d'une phase au cours de laquelle l'intensité n'est pas commandable.

Ainsi, grâce à une consigne prenant une valeur inférieure aux deux premières valeurs on fait remonter à la fin des phases de non commandabilité le courant traversant le composant inductif à partir d'une valeur plus faible ce qui fait baisser d'autant la valeur moyenne de ce courant.

Selon un mode de mise en oeuvre, on élabore la consigne d'intensité de manière qu'après avoir eu la troisième valeur, la consigne passe de la troisième à la première valeur en suivant une fonction affine croissante.

Ainsi, lors de la reprise de la commandabilité, le courant qui va suivre sa consigne part d'une valeur inférieure aux deux premières valeurs pour arriver lentement à la première valeur. On évite ainsi une remontée trop brusque du courant qui peut, en effet, générer des harmoniques sur le courant et/ou entraîner un dépassement de l'intensité d'induction de consigne.

Selon un autre mode de mise en oeuvre, on élabore la consigne d'intensité de manière que lors du passage de la deuxième à la troisième valeur, la consigne d'intensité prend une valeur constante pendant une certaine durée.

La présence de ce palier au cours d'une phase de non commandabilité permet d'éviter que la consigne ne fasse chuter d'avantage le courant traversant le composant inductif.

Selon une caractéristique de cet autre mode de mise en oeuvre, ladite valeur constante est égale à la première valeur.

Selon un autre mode de mise en oeuvre, on crée un courant d'entrée de l'étage abaisseur de tension en phase avec la tension d'entrée de l'étage abaisseur de tension.

Ce déphasage induit, en effet, une puissance réactive transitant par le réseau mais non prélevée par la charge de la batterie. Il est donc intéressant de pouvoir minimiser ce déphasage et réduire la puissance réactive. Ce déphasage est par exemple, dû à un filtre de type RLC qui induit un déphasage entre le courant et la tension prélevés sur le réseau.

De préférence, on régule le courant d'entrée de l'étage abaisseur de tension en commandant en boucle ouverte un rapport cyclique de hachage de l'étage abaisseur de tension en fonction de la tension du réseau d'alimentation monophasé, d'une puissance de consigne et de l'intensité du courant traversant le composant inductif pour mettre le courant d'entrée de l'étage abaisseur de tension en phase avec la tension d'entrée de l'étage abaisseur de tension, et asservir la puissance reçue par la batterie à la puissance de consigne.

On peut également réguler l'intensité du courant traversant la batterie à une intensité de batterie de référence en commandant en boucle fermée un rapport cyclique de hachage de l'étage élévateur de tension en fonction de la tension à la sortie de l'étage abaisseur de tension, de la tension de la batterie, et de la différence entre la consigne d'intensité et l'intensité du courant traversant le composant inductif.

On peut avantageusement désactiver la partie intégrante d'un correcteur de type proportionnel intégral si le rapport cyclique de hachage est égal, à une distance seuil près, des valeurs 0 ou 1.

D'autres avantages et caractéristiques de l'invention apparaîtront à l'examen de la description détaillée d'un mode de réalisation de l'invention, nullement limitatif, et des dessins annexés sur lesquels :

- la figure 1 illustre un dispositif de recharge selon un mode de réalisation de l'invention ;
- les figures 2a et 2b illustrent respectivement un premier et un deuxième modes de réalisation d'un premier module de contrôle ;
- la figure 3 présente de manière schématique un mode de réalisation d'un second module de contrôle ;
- la figure 4 présente une représentation graphique du courant traversant la bobine d'induction ;
- les figures 5 à 8 montrent des représentations graphiques du courant traversant la bobine d'induction en fonction de l'intensité d'induction de consigne ; et
- la figure 9 illustre la comparaison des variables du système de recharge en fonction de la consigne.

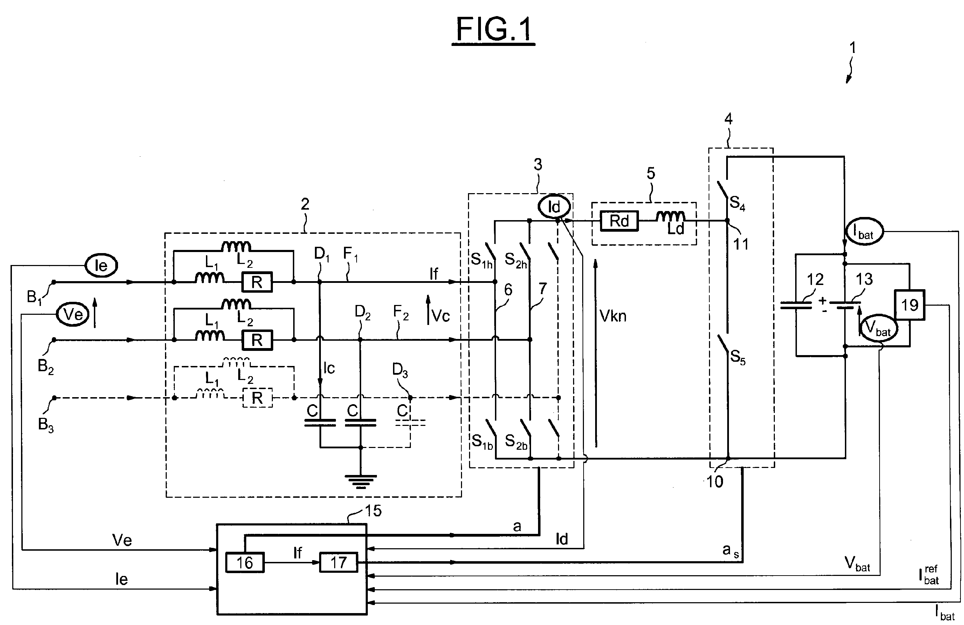

Sur la figure 1, est présenté de manière schématique un dispositif de charge d'une batterie d'un véhicule automobile à traction électrique à partir d'un réseau d'alimentation monophasé, selon un mode de réalisation.

Le dispositif de recharge 1 comprend un étage de filtrage 2, un étage abaisseur de tension 3 couplé à l'étage de filtrage 2, et un étage élévateur de tension 4 couplé à l'étage abaisseur de tension 3 via une machine électrique 5.

Le dispositif 1 pouvant être couplé à une alimentation aussi bien triphasée que monophasée, il comprend trois bornes $B_1$, $B_2$, $B_3$ couplées en entrée de l'étage de filtrage 2, et aptes à être couplées à un réseau d'alimentation. En recharge monophasée, seules les entrées $B_1$ et $B_2$ sont couplées à un réseau d'alimentation monophasé délivrant une tension d'entrée Ve et un courant d'entrée Ie.

Chaque borne d'entrée $B_1$, $B_2$ et $B_3$ est couplée à une branche de filtrage de l'étage de filtrage 2. Chaque branche de filtrage comprend deux branches en parallèle, portant l'une une inductance de valeur $L_2$ et l'autre portant en série une inductance de valeur $L_1$ et une résistance de valeur R.

Ces deux branches de filtrage sont chacune couplées en sortie à un condensateur de capacité C, en un point respectivement nommé $D_1$, $D_2$, $D_3$ pour chacune des branches de filtrage. L'ensemble des résistances de valeurs R, des inductances de valeurs $L_1$ ou $L_2$, et des condensateurs de capacité C constitue un filtre de type RLC à l'entrée de l'abaisseur de tension 3.

En recharge monophasée, la borne $B_3$ n'est pas couplée au réseau d'alimentation. La branche de filtrage couplée à la borne $B_3$ n'étant pas utilisée, celle-ci ne sera pas considérée dans la suite de la description et a été représentée en pointillés. Les autres éléments du circuit électrique représentés en pointillés sont des éléments qui ne sont utilisés que dans le cadre d'un couplage à un réseau d'alimentation triphasé.

L'étage abaisseur de tension 3 est couplé à l'étage de filtrage 2 par les points $D_1$ et $D_2$. L'abaisseur de tension 3, en fonctionnement avec une alimentation monophasée, comprend deux branches parallèles 6 et 7, portant chacune deux interrupteurs $S_{1h}$ et $S_{1b}$ ou $S_{2h}$ et $S_{2b}$ commandés par une unité de régulation 15.

Chaque entrée $D_1$ ou $D_2$ de l'abaisseur de tension est connectée, respectivement par une branche $F_1$ et $F_2$ à un point de connexion situé entre deux interrupteurs $S_{1h}$ et $S_{1b}$ ou $S_{2h}$ et $S_{2b}$ d'une même branche respectivement 6 et 7.

Les extrémités communes des branches 6 et 7 constituent deux bornes de sortie de l'abaisseur de tension 3. L'une des bornes est reliée à la borne « - » de la batterie 13 ainsi qu'à une première entrée 10 d'un élévateur de tension 4. L'autre de ces bornes est connectée à une première borne d'une machine électrique 5, dont l'autre borne est connectée à une seconde entrée 11 de l'élévateur de tension 4.

L'élévateur de tension 4 comprend deux interrupteurs $S_4$ et $S_5$ pilotables par l'unité de régulation 15 de manière indépendante. Ces deux interrupteurs $S_4$ et $S_5$ sont situés sur une branche reliant la première entrée 10 de l'élévateur de tension 4 et la borne « + » de la batterie 13. La seconde entrée 11 de l'élévateur de tension 4, à laquelle est connectée la machine électrique 5, est connectée entre les deux interrupteurs $S_4$ et $S_5$, l'interrupteur $S_4$ étant couplée entre la seconde entrée 11 et la borne « + » de la batterie 143, et l'interrupteur $S_5$ étant couplé entre la première entrée 10 et la seconde entrée 11.

Une machine électrique 5, assimilable à une résistance de valeur Rd disposée en série avec une bobine d'inductance Ld, est connectée entre la borne de sortie de l'abaisseur de tension 3 et la seconde entrée 11 de l'élévateur de tension 4. On ne sort pas du cadre de l'invention si l'on remplace la machine électrique 5 par une bobine d'inductance non résistive ou si l'on branche en série avec la machine électrique 5 une bobine d'induction supplémentaire.

Aux bornes de la batterie 13, est connecté un condensateur 12 destiné à maintenir relativement stable la tension aux bornes de la batterie 13, ainsi qu'un module 19 de suivi de charge de la batterie, apte à délivrer une valeur de consigne $I_{bat}^{ref}$ traduisant, en fonction du niveau de charge de la batterie, l'intensité optimale de courant à faire entrer par la borne « + » de la batterie 13. Le module 19 de suivi de charge transmet la valeur de consigne $I_{bat}^{ref}$ à l'unité de régulation 15 par une connexion dédiée.

Des moyens de mesure, intégrés ou non au module 19, transmettent par ailleurs à l'unité de régulation 15 une valeur $I_{bat}$ traduisant une intensité de courant mesurée entrant effectivement dans la batterie, et une valeur $V_{bat}$ traduisant la tension entre la borne « - » et la borne « + » de la batterie 13.

D'autres modules de mesure d'intensité de courant permettent de mesurer et transmettre à l'unité de régulation 15 la valeur Id de courant traversant la machine électrique 5, la valeur le d'intensité de courant du réseau d'alimentation entrant dans l'étage de filtrage 2, et la valeur Ve de tension d'entrée d'alimentation du réseau.

L'unité de régulation 15 comprend un premier module de contrôle 16 permettant de déterminer le rapport cyclique *a* de hachage de l'étage abaisseur de tension 3, et un second module de contrôle 17 permettant de déterminer une consigne de rapport cyclique $a_s$ de hachage de l'étage élévateur de tension 4.

L'unité de régulation 15 comprend pour cela deux modules pilotes (non représentés), apte pour le premier à imposer un motif temporel d'ouverture et de fermeture à chacun des interrupteurs de l'abaisseur de tension 3, de manière à obtenir le rapport cyclique de hachage *a* de l'étage abaisseur de tension 3, et apte pour le second à imposer un motif temporel d'ouverture et de fermeture à chacun des interrupteurs $S_4$ et $S_5$ de l'élévateur de tension 4, de manière à obtenir le rapport cyclique $a_s$.

Les interrupteurs sont de préférence des transistors permettant une commutation rapide, par exemple des transistors de type IGBT (Insulated Gate Bipolar Transistor).

Pour évaluer les rapports cycliques *a* et $a_s$, l'unité de régulation 15 reçoit en entrée les valeurs de la tension Ve d'alimentation du réseau, de l'intensité Id du courant traversant la machine électrique 5, de la tension $V_{bat}$ traversant la batterie 13, l'intensité $I_{bat}$ du courant traversant la batterie 13, et l'intensité de batterie de référence $I_{bat}^{ref}$ délivrée par le module 19 de suivi de charge.

En fonction du rapport cyclique *a,* l'unité de régulation 15 effectue une commande de l'état de chacun des interrupteurs $S_{1h}$, $S_{1b}$, $S_{2h}$ et $S_{2b}$ de l'étage abaisseur 3. De même, en fonction du rapport cyclique $a_s$, l'unité de régulation 15 peut commander l'état des interrupteurs $S_4$ et/ou $S_5$ de l'étage élévateur 4.

A titre indicatif, les valeurs caractéristiques des éléments électriques du dispositif de charge 1 se trouvent dans les plages de valeurs suivantes :

- les capacités du filtre 2 représentent quelques centaines de μF, par exemple entre 100 et 500 μF chacune,
- la capacité 12 disposée aux bornes de la batterie 13 afin de stabiliser la tension des bornes, est de l'ordre du mF, par exemple entre 1 et 10 mF,
- les résistances de valeurs R du circuit de filtrage 2 sont de l'ordre de l'ohm, par exemple entre 1 et 10 $\Omega$,
- la résistance Rd du rotor de la machine électrique Me est de l'ordre de quelques dizaines de m$\Omega$, par exemple entre 0,01 $\Omega$ et 0,1 $\Omega$,
- les inductances L1, L2, Ld correspondant respectivement aux inductances de l'étage de filtrage 2 et au bobinage de la machine électrique 5, ont des valeurs de l'ordre de quelques dizaines de μH, par exemple des valeurs comprises entre 10 μH et 100 μH.

L'unité de régulation élabore à l'aide du premier module de contrôle 16 et du second module 17, des valeurs de consigne de rapport cyclique $a$ et $a_s$ de hachage pour l'abaisseur de tension 3 et pour l'élévateur de tension 4, permettant de satisfaire à trois objectifs :

- contrôler l'amplitude du courant If d'entrée de l'étage abaisseur de tension 3 et faire en sorte que ce courant If soit en phase avec la tension Ve d'entrée (ce contrôle a pour objectif de créer un courant If d'entrée de l'étage abaisseur de tension 3 en phase avec la tension d'entrée), ce qui revient à asservir la puissance tirée au réseau d'alimentation,
- obtenir un courant mesuré entrant $I_{bat}$ par la borne « + » de la batterie 13, correspondant aux besoins d'alimentation de la batterie 13, ces besoins étant déterminés par le module 19 de suivi de charge et délivrés en tant que fonction $I_{bat}{}^{ref}$ à l'unité de régulation 15,
- éviter une annulation du courant Id transitant au travers de la bobine d'induction Ld de la machine électrique 5.

La chute de tension étant négligeable sur l'étage de filtrage 2 pour la plage de puissance de l'utilisation, il n'est pas nécessaire de décrire les équations du filtre d'entrée.

On considère que la tension Vc à l'entrée de l'étage abaisseur de tension 3 est égale à la tension d'entrée Ve du réseau d'alimentation.

La tension de sortie Vkn de l'étage abaisseur de tension 3 est égale à $a{\cdot}Ve$. Etant égale à $a{\cdot}Ve$, nous pouvons écrire l'équation de la branche portant la machine électrique 5, sous la forme :

$$Rd{\cdot} Id + Ld{\cdot} s{\cdot} Id = a{\cdot} Ve - a_s{\cdot} V_{bat} \qquad (\text{équation } 1)$$

où s représente la variable de Laplace,
$a$ représente le rapport cyclique de hachage de l'étage abaisseur de tension 3, $a_s$ le rapport cyclique de l'étage élévateur de tension 4.

Le rapport cyclique $a$ de hachage de l'étage abaisseur de tension 3 peut également s'écrire a=If/Id, avec If le courant d'entrée dans l'étage élévateur de tension 3, et le rapport cyclique $a_s$ de hachage de l'étage élévateur de tension 4 est donné par $a_s$=$I_{bat}$/Id.

L'équation (1) peut donc également s'écrire sous la forme :

$$Rd \cdot Id + Ld \cdot s \cdot Id = \left(If \cdot Ve - I_{bat} \cdot V_{bat}\right)/ Id \qquad (\text{équation } 2)$$

ou encore :

$$Rd \cdot Id^{\,2} + \frac{Ld}{2} \cdot s \cdot Id^2 = If \cdot Ve - I_{bat} \cdot V_{bat} \qquad (\text{équation } 3)$$

D'après l'équation 3, on peut donc utiliser l'intensité If du courant d'entrée de l'étage abaisseur de tension 3 comme variable de contrôle pour asservir le courant Id traversant la machine électrique 5 à une valeur de consigne Id$^{ref}$ qui sera élaborée de manière à ne pas permettre l'annulation du courant dans la bobine d'inductance Ld.

Lorsque la tension d'entrée Ve avoisine zéro, le système, même s'il est asservit, devient non commandable.

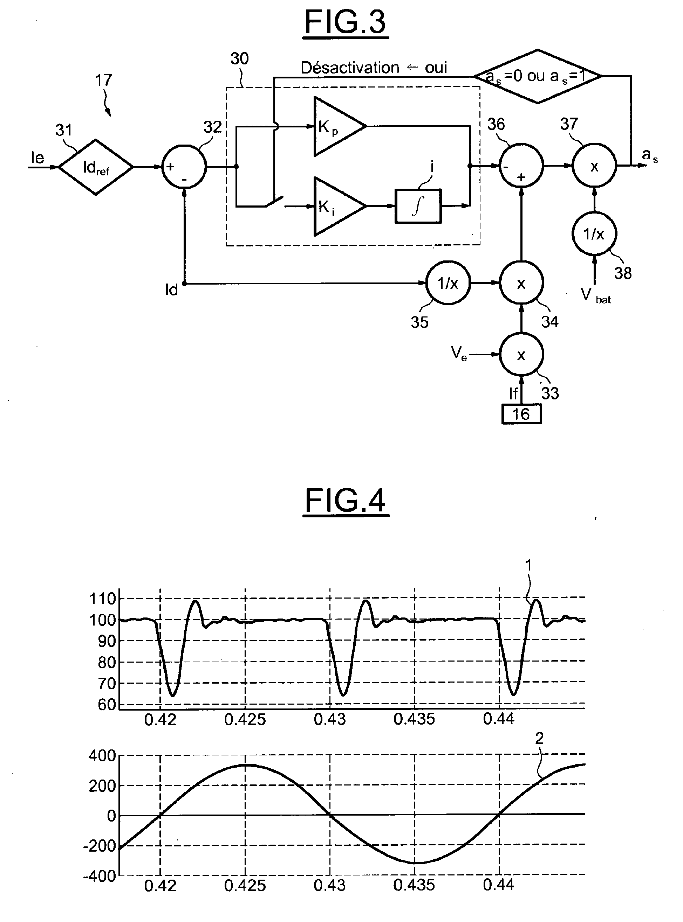

D'après les équations, pendant ces phases de non commandabilité le courant Id dans la bobine Ld de la machine électrique 5 ne peut que diminuer, comme cela est illustré sur la figure 4.

En divisant la valeur de l'intensité If du courant d'entrée de l'étage abaisseur de tension 3 par la valeur de l'intensité Id du courant mesuré au travers de la machine électrique 5, on obtient par définition la valeur du rapport cyclique *a* de hachage de l'étage abaisseur de tension 3.

La tension d'entrée Vc de l'étage abaisseur de tension 3, égale à la tension d'entrée Ve du réseau d'alimentation, est de la forme $Vc=Ve=V_m \sin(\omega t)$.

La commande assure que If soit en phase avec la tension d'entrée. Le courant d'entrée Ie est donné par Ie=If+Ic, c'est-à-dire $Ie=If_m \sin(\omega t)+ C/2 \, V_m \cos(\omega t)$.

Le courant If est donc une image de la puissance active prise au réseau. Cette dernière est donnée par la relation $P_{active}=If_m V_m/2$, où $If_m=2 \, P_{active}/V_m$.

Si on régule le courant d'entrée Ie par le courant If d'entrée de l'étage abaisseur de tension 3 et qu'on régule le courant Id traversant la machine électrique 5 par le courant If d'entrée de l'étage de l'abaisseur de tension 3 pour éviter l'annulation de courant dans la bobine Ld de la machine électrique 5, il reste alors à satisfaire le troisième objectif de la régulation effectuée par l'unité de régulation 15, relatif à l'asservissement du courant entrant dans la batterie $I_{bat}$ à la valeur de consigne $I_{bat}^{ref}$ délivrée par le module 19 de suivi de charge.

Pour cela on peut par exemple imposer un rapport cyclique de hachage $a_s$ à l'élévateur de tension de manière à respecter la relation $a_s=I_{bat}^{ref}/Id$.

La relation traduisant la dynamique du courant au travers de la machine électrique 5, donnée par l'équation (1) lie directement le rapport cyclique $a_s$ de l'étage élévateur 4 et le courant Id traversant la machine électrique 5.

Il est donc possible de piloter $a_s$ directement à partir de l'erreur entre une valeur de référence $Id^{ref}$ et la valeur mesurée Id traversant la machine électrique 5.

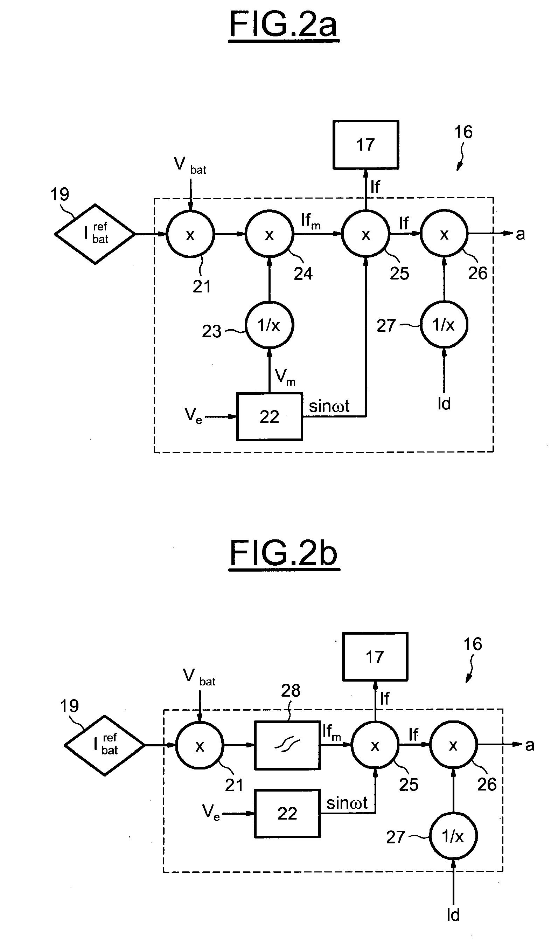

Sur la figure 2a, est représenté de manière schématique un premier mode de réalisation du premier module 16 de contrôle. Le premier module de contrôle comprend une régulation en boucle ouverte du courant d'entrée If de l'étage abaisseur de tension 3. La régulation du courant d'entrée If de l'étage abaisseur de tension 3 est réalisée en calculant le rapport cyclique *a* de hachage de l'abaisseur de tension 3.

Le rapport cyclique *a* de hachage de l'étage abaisseur de tension 3 est déterminé en fonction de la puissance de consigne $P_{bat}^{ref}$, déterminée à partir de la tension de la batterie $V_{bat}$ et de l'intensité de batterie de consigne $I_{bat}^{ref}$, de la tension d'entrée Ve du réseau d'alimentation monophasé et de l'intensité Id du courant traversant la bobine d'induction Ld.

Le premier module de contrôle 16 reçoit sur une première entrée la consigne d'intensité de batterie $I_{bat}^{ref}$ ainsi que, sur une deuxième entrée, la tension mesurée aux bornes de la batterie $V_{bat}$. L'intensité de consigne de la batterie $I_{bat}^{ref}$ et la tension $V_{bat}$ de la batterie sont délivrées en entrée d'un premier multiplicateur 21 qui délivre alors en sortie la puissance de consigne $P_{bat}^{ref}$.

Sur une troisième entrée, le module de contrôle 16 reçoit la tension d'entrée Ve du réseau d'alimentation. Le module 16 comprend un analyseur de signal 22 permettant d'extraire le signal d'amplitude normalisée $V_m$ proportionnel à la tension d'entrée Ve du réseau d'alimentation monophasé. Le signal d'amplitude $V_m$ est délivré à un premier inverseur 23 qui délivre en sortie l'inverse de l'amplitude $V_m$. L'inverse $V_m$ de cette amplitude est délivré à un second multiplicateur 24 qui reçoit également en entrée la puissance de consigne $P_{bat}^{ref}$.

Le second multiplicateur 24 délivre alors en sortie l'amplitude $If_m$ du courant d'entrée de l'étage abaisseur de tension 3 à un troisième multiplicateur 25 qui reçoit également en entrée le signal de phase $\sin(\omega t)$ de la tension d'entrée Ve du réseau d'alimentation monophasé.

Le troisième multiplicateur 25 délivre alors en sortie le courant If d'entrée de l'étage abaisseur de sortie 3, d'une part, au second module 17 de contrôle et, d'autre part, à un quatrième multiplicateur 26. Le module 16 reçoit sur une quatrième entrée, la valeur Id de l'intensité du courant traversant la bobine Ld de la machine électrique 5. La valeur Id du courant traversant la bobine Ld est délivrée à un second inverseur 27 qui délivre en sortie l'inverse de l'intensité Id du courant traversant la bobine Ld au quatrième multiplicateur 26.

Le quatrième multiplicateur 26 effectue alors le calcul If/Id et délivre en sortie la valeur du rapport cyclique *a* de hachage de l'étage abaisseur de tension 3, permettant l'asservissement du courant d'entrée If de l'étage d'abaisseur de tension 3.

Sur la figure 2b, est illustré un second mode de réalisation du premier module 16 de contrôle.

Dans ce module 16, le deuxième multiplicateur 24 a été remplacé par une cartographie 28 délivrant l'amplitude $If_m$ du courant d'entrée If de l'étage abaisseur de tension 3 en fonction de l'amplitude $V_m$ de la tension d'entrée Ve et de la puissance de consigne $P_{bat}^{ref}$.

La figure 3 illustre un mode de réalisation du second module 17 de contrôle.

Dans le dispositif 1 de charge, la régulation du courant $I_{bat}$ traversant dans la batterie 13 est commandée par l'étage élévateur de tension 4. En effet, le courant $I_{bat}$ de la batterie est donné par la relation $I_{bat}=a_s Id$.

Ainsi, pour asservir le courant $I_{bat}$ dans la batterie 13 à sa valeur de référence, il suffit de poser $a_s=I_{bat}^{ref}/Id$.

Il est également possible de rajouter une boucle de correction si la mesure de courant de la batterie est disponible. Dans ce cas, on obtient :

$$a_s = \frac{1}{Id} \cdot \left[ I_{bat}{}^{ref} + \alpha \cdot \left( I_{bat}{}^{ref} - I_{bat} \right) \right] \qquad \text{(équation 4)}$$

où $\alpha$ est un paramètre de réglage.

Le second module 17 de contrôle comprend une régulation en boucle fermée de l'intensité Id du courant traversant la bobine d'induction Ld de la machine électrique 5.

Le second module 17 de contrôle reçoit à une première entrée une valeur Ie de l'intensité d'entrée du réseau d'alimentation. Cette valeur Ie d'intensité est délivrée à un module 31 déterminant la valeur de l'intensité d'induction de consigne Id$^{ref}$. Le second module 17 de contrôle reçoit à une seconde entrée la valeur Id de l'intensité traversant la bobine Ld de la machine électrique 5. La valeur Id de l'intensité est délivrée à une entrée négative d'un premier soustracteur 32 qui reçoit à une entrée positive la valeur Id$^{ref}$ de l'intensité d'induction de consigne.

Le premier soustracteur 32 délivre alors en sortie la différence entre l'intensité Id du courant traversant la bobine d'inductance Ld et l'intensité d'inductance de consigne Id$^{ref}$ à un correcteur 30 de type proportionnel intégral.

Le correcteur proportionnel intégral 30 comprend deux branches en parallèle, dont une première comporte un module $K_p$ de correction proportionnelle et une seconde comporte un module Ki de correction intégrale et un module d'intégration i.

Le second module 17 de contrôle reçoit sur une troisième entrée la valeur If de l'intensité du courant en entrée de l'étage abaisseur de tension 3 délivrée par le premier module 16 de contrôle. L'intensité If est délivrée à un premier multiplicateur 33, qui reçoit également en entrée la tension d'entrée Ve du réseau monophasé reçu sur une quatrième entrée du second module 17 de contrôle.

Le premier multiplicateur 33 délivre ainsi en sortie une valeur P$_{active}$ de la puissance active. Cette valeur P$_{active}$ est délivrée en entrée d'un second multiplicateur 34 qui reçoit également en entrée l'inverse du courant Id, le courant Id ayant été délivré à un premier inverseur 35 au préalable.

Le second multiplicateur 34 réalise le calcul P$_{active}$/Id et délivre en sortie une valeur Vkn de la tension de sortie de l'étage abaisseur de tension 3. La tension Vkn de l'étage abaisseur de tension 3 est délivrée à une entrée positive d'un second soustracteur 36 qui reçoit sur une entrée négative la sortie du correcteur proportionnel intégral 30.

Le second soustracteur 36 délivre alors en sortie l'addition de la différence entre l'intensité Id du courant traversant la bobine d'inductance Ld et l'intensité d'inductance de consigne Id$^{ref}$ corrigée par le correcteur proportionnel intégral 30, avec la tension Vkn de sortie de l'étage abaisseur de tension 3 en entrée d'un troisième multiplicateur 37. Le troisième multiplicateur 37 reçoit également en entrée l'inverse de la tension de batterie V$_{bat}$, la tension de batterie V$_{bat}$ ayant été reçue sur une cinquième entrée du second module 17 de contrôle et délivrée au préalable à un second inverseur 38.

Le troisième multiplicateur 37 délivre alors en sortie la valeur de consigne du rapport cyclique $a_s$ de hachage de l'étage élévateur de tension 4.

Le second module 17 de contrôle comprend également une boucle de rétroaction entre la sortie du troisième multiplicateur 37 et l'entrée de la branche du correcteur 30 proportionnel intégral comprenant le module de correction intégrale Ki.

Si la valeur du rapport cyclique $a_s$ de hachage de l'étage élévateur de tension 4 est égale à 0 ou 1 à un seuil près, la branche de correction intégrale est désactivée.

Cette boucle de rétroaction correspond à une technique d'anti-emballement utilisée pour palier la non commandabilité du dispositif lorsque la tension d'entrée Ve avoisine zéro. En effet, lors des phases de non commandabilité, la commande est saturée, c'est-à-dire que les rapports cycliques des interrupteurs, ou transistors IGBT, sont à 1, alors qu'elle n'est pas capable de diminuer l'écart. Pour éviter que cette erreur continue à être intégrée, la boucle de rétroaction est utilisée. De cette façon, dès que le dispositif est commandable le courant Id traversant la bobine Ld de la machine électrique 5 est ramené à la valeur de référence Id$^{ref}$.

L'utilisation de cette boucle de rétroaction permet également de commander un système qui possède une bobine Ld à très faible inductance. L'utilisation d'une bobine de faible inductance permet de réduire le volume du chargeur.

L'invention permet de fournir un dispositif de charge embarqué pour un véhicule automobile, adapté pour pouvoir être connecté à un réseau d'alimentation monophasé extérieur, intégrant dans son circuit le bobinage d'une machine électrique du véhicule, et permettant de réguler l'abaisseur de tension et l'élévateur de tension de sorte à garder un déphasage réduit entre le courant et la tension prélevés sur le réseau d'alimentation monophasé.

La figure 4 montre deux repères comprenant chacun un axe horizontal représentant le temps en seconde et un axe vertical représentant respectivement le courant en Ampères et la tension en volts. Les courbes 1 et 2 illustrées représentent respectivement l'évolution du courant Id en Ampères traversant le composant inductif Ld pour une consigne ou intensité d'induction de consigne de valeur constante par exemple Id$^{ref}$ = 100 A et l'évolution de la tension Ve, en fonction des phases de non-commandabilité.

Sur cette figure 4, il apparaît que lorsque la valeur absolue de la tension Ve est proche de la valeur nulle, une phase de non commandabilité existe selon laquelle le courant Id chute rapidement. Les phases de non commandabilité sont, dans le cas d'une tension d'entrée monophasée périodique, périodiques avec une fréquence deux fois supérieure à celle de la tension d'entrée Ve.

On peut donc prévoir et/ou détecter les phases de non commandabilité. Par exemple, on peut définir un seuil pour la valeur absolue de la tension d'entrée Ve en dessous duquel on détecte une phase de non commandabilité. Selon un autre exemple, après la détection d'une première phase de non commandabilité, on peut prévoir la prochaine phase puisqu'elles apparaissent périodiquement.

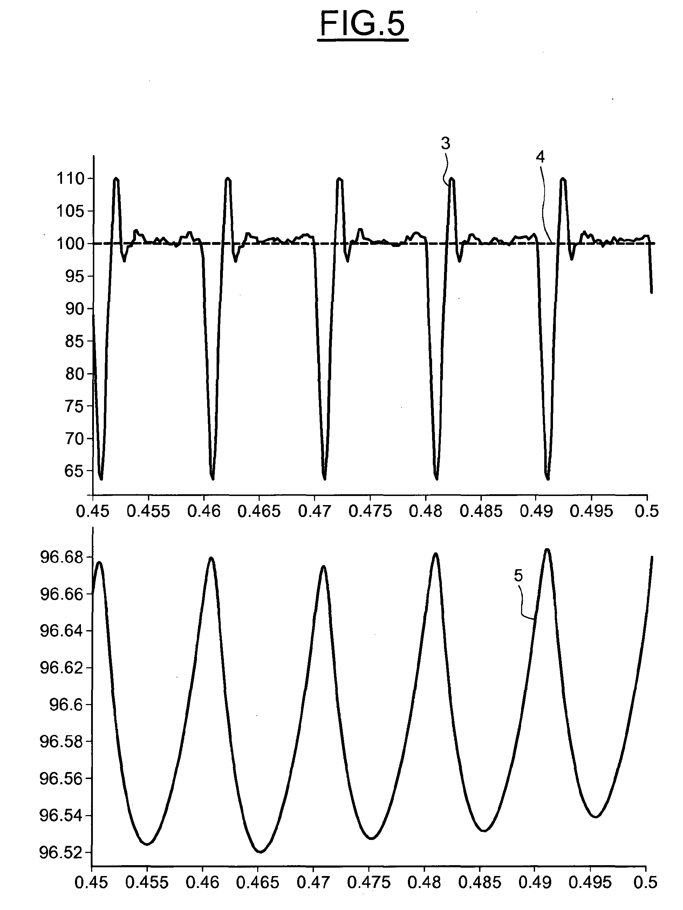

La figure 5 montre deux repères comprenant chacun un axe horizontal représentant le temps en seconde et un axe vertical représentant le courant en Ampères. Les courbes 3 et 4 illustrées représentent respectivement l'évolution détaillée du courant Id en Ampères traversant le composant inductif Ld et la consigne de valeur constante Id$^{ref}$ = 100 A délivrée par le module 31 de la figure 3. La courbe 5 illustrée représente l'évolution de la valeur du courant Id après une moyenne glissante. Il apparaît qu'avec une consigne Id$^{ref}$ = 100 A le courant Id a une valeur moyenne autour de 96,6 A comprise entre 96,52 et 96,68 A.

Il est alors prévu de transmettre à l'aide de l'étage élévateur 4 (figure 1) le courant Id à la batterie sous la forme du courant I$_{bat}$. Or, avec un système de charge tel que celui illustré ci-dessus, pour charger une batterie 300 V avec une puissance de 7kw, le courant I$_{bat}$ doit être de 25 A. Dans un réseau européen classique à 230 Volts en valeur efficace, le courant réseau prélevé à une telle puissance sera de 30,5 A en valeur efficace, soit 43 A d'amplitude. Il apparaît donc que la valeur moyenne de Id (96. 6 A) est d'une part importante et d'autre part très différente de la valeur du courant prélevée par la batterie I$_{bat}$ ainsi que du courant réseau prélevé (43 A d'amplitude). Cette valeur importante et différente du courant I$_{bat}$ et du courant réseau implique des pertes énergétiques comme expliqué ci-après. Une solution pourrait être de baisser la valeur de consigne Id$^{ref}$ délivrée par le module 31 de la figure 3 pour diminuer le courant Id.

Cette solution n'est en fait pas possible car un courant non nul doit toujours circuler dans l'inductance de stockage de la machine électrique entre l'abaisseur de tension et l'élévateur de tension, c'est-à-dire que le courant Id doit être toujours supérieur à 0 A y compris lors des phases de non commandabilité. Avec un système de charge tel qu'illustré ci-dessus et une amplitude du courant d'entrée Ie de l'ordre de 43 A, une consigne Id$^{ref}$ impliquant une valeur minimale de l'intensité Id de 55 A (cette valeur minimale étant atteinte par exemple lors d'une phase de commandabilité) permet seulement une marge de sécurité de 12 A.

L'utilisation telle qu'illustrée sur la figure 5 d'une consigne constante Id$^{ref}$ = 100 A permet une marge de sécurité suffisante de l'ordre de 20 A (cette valeur de marge est obtenue en soustrayant à valeur minimale lors des phases de non commandabilité : 63.79 A, la valeur de l'amplitude du courant d'entrée 43 A, 63.79 A - 43 A = 20.79 A) mais avec un rendement énergétique non satisfaisant du fait de la grandeur du courant Id et de sa différence avec la valeur du courant prélevée par la batterie I$_{bat}$.

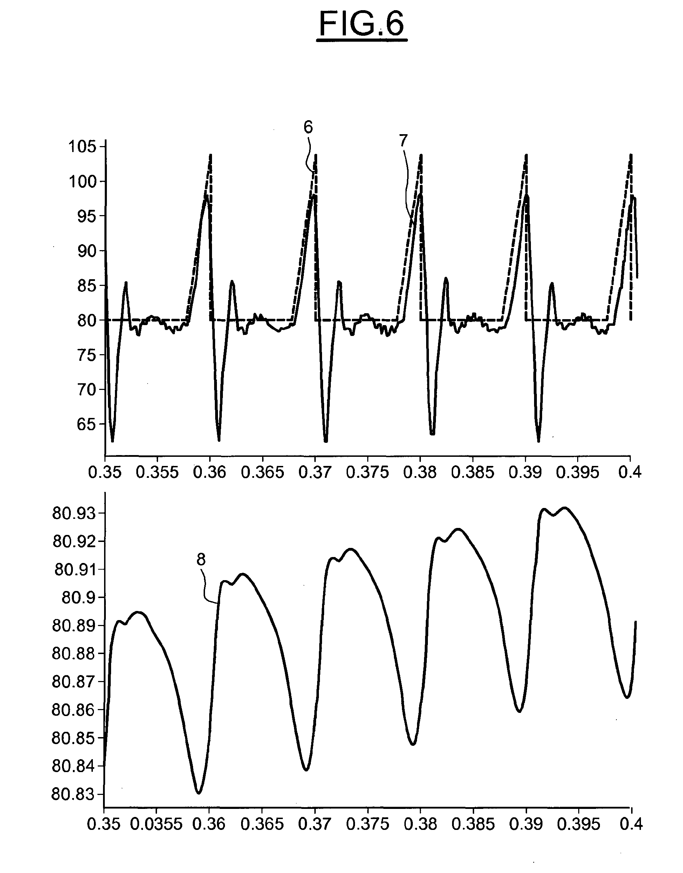

Une solution à ce problème est illustré sur la figure 6. La figure 6 montre deux repères comprenant chacun un axe horizontal représentant le temps en seconde et un axe vertical représentant le courant en Ampères. Les courbes 6 et 7 illustrées représentent respectivement une nouvelle consigne Id$^{ref}$ et l'évolution détaillée du courant Id en Ampères traversant le composant inductif en fonction de cette nouvelle consigne. Selon la courbe 6, il apparaît que la nouvelle consigne prend deux valeurs, une première valeur égale à un seuil milieu de l'ordre de 80 A et une deuxième valeur égale à un seuil haut de l'ordre de 105 A. La consigne monte rapidement de la première à la deuxième valeur puis lorsqu'elle atteint la deuxième valeur, elle descend instantanément à la première valeur. La durée de montée de la première à la deuxième valeur est par exemple de $\pi$/4 valeur exprimée en radian, la référence étant l'angle électrique $\omega$t de la tension Ve=Vm sin($\omega$t). La durée de montée correspondante exprimée en période est donc de 1/8 période, c'est-à-dire dans le cas d'une fréquence 50Hz :

$$(\pi/4)/(2.\pi.50)=2,5 \text{ ms.}$$

Selon la courbe 7, il apparaît qu'avec la consigne Id$^{ref}$ illustrée sur la courbe 6, le courant Id prend une valeur minimale de l'ordre de 62.71 A lors des phases de non commandabilité. Cette valeur est quasiment identique à celle obtenue avec la consigne constante fixée à Id$^{ref}$ = 100 A. Cela est dû à la prise de la deuxième valeur (105 A) par la consigne juste avant la phase de non commandabilité.

Par ailleurs, la courbe 8 illustrée représente l'évolution de la valeur du courant Id (courbe 7) après une moyenne glissante. Il apparaît qu'avec cette nouvelle consigne Id$^{ref}$ (courbe 6) le courant Id a une valeur moyenne autour de 80,9 A comprise entre 80,83 et 80,93 A.

On obtient donc avec la nouvelle consigne, un courant Id dont la valeur moyenne est fortement baissée mais dont la valeur minimale est identique. Il est ainsi illustré sur la figure 6, une solution consistant à une nouvelle consigne Id$^{ref}$ prenant deux valeurs grâce à laquelle l'intensité moyenne du courant Id est diminuée tout en permettant une intensité minimale du courant Id correspondant à une marge de sécurité identique. On obtient alors un rendement énergétique amélioré tout en conservant une marge de sécurité suffisante. Plus précisément, le courant moyen baisse de 16% (80,9 A par rapport à 96,6 A), ce qui permet d'une part une diminution des pertes joules et des pertes fer dans la machine électrique 5 (figure 1) et d'autre part une commutation de l'étage élévateur de tension 4 (figure 1) selon un rapport cyclique $a_s$ qui permet un rendement plus important puisque l'intensité Id est plus proche de I$_{bat}$ tout en lui restant supérieure.

Bien entendu, il serait également possible selon d'autres réglages consistant par exemple à une consigne dont la valeur du seuil haut est augmentée d'obtenir une augmentation du rendement énergétique et de la marge de sécurité ou une augmentation de la marge de sécurité sans augmentation du rendement énergétique.

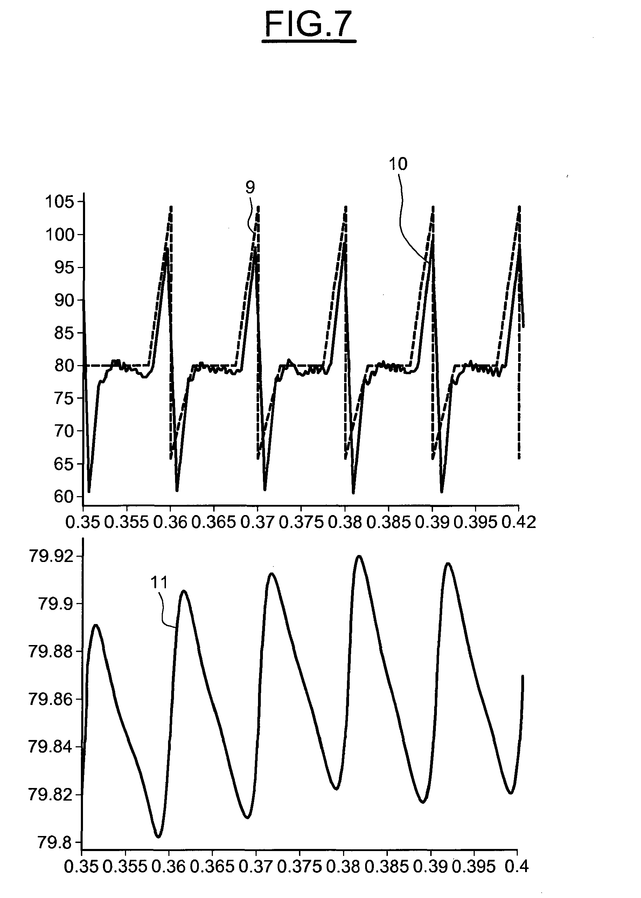

Cela étant, il apparaît sur la figure 6 que la courbe 7 présente un dépassement de la consigne important lors de la reprise de commandabilité. Une solution à ce problème est illustrée sur la figure 7 suivante.

Tout comme la figure 6, la figure 7 montre deux repères comprenant chacun un axe horizontal représentant le temps en seconde et un axe vertical représentant le courant en Ampères. Les courbes 9 et 10 illustrées représentent respectivement une nouvelle consigne Id$^{ref}$ et l'évolution détaillée du courant Id en Ampères traversant le composant inductif en fonction de cette nouvelle consigne. La courbe 11 illustrée représente l'évolution de la valeur du courant Id (courbe 10) après une moyenne glissante.

Il apparaît que comme la consigne illustrée sur la courbe 6, la consigne de la courbe 9 prend une première valeur égale à un seuil milieu de l'ordre de 80 A et une deuxième valeur égale à un seuil haut de l'ordre de 105 A. La consigne de la courbe 9 se distingue de celle de la courbe 6 par une troisième valeur, appelée seuil bas que prend la consigne lors des phases de non commandabilité. A titre d'exemple de mise en oeuvre, le seuil bas a pour valeur 66 A. Après avoir pris cette troisième valeur, la consigne de la courbe 9 remonte vers la valeur première valeur seuil moyen. A titre d'exemple de mise en oeuvre, la durée de montée de la troisième à la première valeur est de $\pi/4$ valeur exprimée en radian, la référence étant l'angle électrique $\omega$t de la tension Ve=V$_m$ sin($\omega$t). La durée de montée correspondante exprimée en période est donc de 1/8 période, c'est-à-dire dans le cas d'une fréquence 50Hz : $(\pi/4)/(2.\pi.50)$=2,5 ms.

Avec cette nouvelle consigne, il apparaît sur la courbe 10 que le courant Id dépasse encore un peu la consigne, mais d'une valeur bien inférieure à celle de la courbe 7. Cela est dû à une remontée lente du courant Id de la troisième valeur vers la première valeur à partir de la fin d'une phase de non commandabilité, cette remontée lente étant due à la consigne Id$^{ref}$ qui présente également cette remontée lente.

Par la suite le courant Id illustré sur la courbe 10 va atteindre une valeur maximale similaire à celui de la courbe 7 puis une valeur minimale un peu inférieure à celle de la courbe 7. Plus précisément, le courant Id de la courbe 10 va atteindre une valeur minimale de 60,89 A et une valeur moyenne (illustrée sur la courbe 11) autour de 79,86 A comprise entre 79,83 et 79,92 A. La consigne de la courbe 9 permet donc de baisser la valeur moyenne et d'éviter une remontée trop brusque, cette remontée trop brusque entrainant des harmoniques sur le courant et un dépassement de la consigne.

Cela étant, avec la consigne de la courbe 9, la valeur minimale obtenue de 60,89 A est un peu juste puisqu'elle ne permet une marge de sécurité que de 60.89 A - 43 A = 17.89 A.

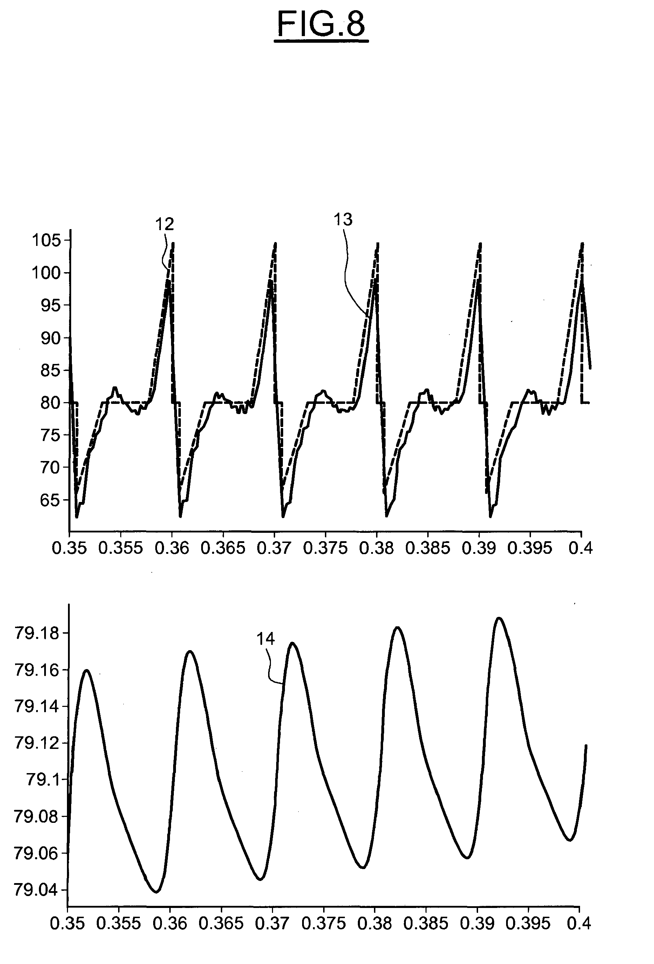

Il est proposé selon la figure 8 une consigne permettant de palier à ce problème. Tout comme la figure 7, la figure 8 montre deux repères comprenant chacun un axe horizontal représentant le temps en seconde et un axe vertical représentant le courant en Ampères. Les courbes 12 et 13 illustrées représentent respectivement une nouvelle consigne Id$^{ref}$ et l'évolution détaillée du courant Id en Ampères traversant le composant inductif en fonction de cette nouvelle consigne. La courbe 14 illustrée représente l'évolution de la valeur du courant Id (courbe 13) après une moyenne glissante.

Il apparaît que tout comme la consigne de la courbe 9, la consigne de la courbe 12 prend une première valeur égale à un seuil milieu de l'ordre de 80 A et une deuxième valeur égale à un seuil haut de l'ordre de 105 A et une troisième valeur égale à un seuil bas de l'ordre de 66 A. La consigne de la courbe 12 se distingue de celle de la courbe 9 par un palier que prend la consigne lors des phases de non commandabilité.

Ce palier correspond à une valeur constante prise par l'intensité d'induction de consigne pendant une certaine durée lors du passage de la deuxième à la troisième valeur. A titre d'exemple de mise en oeuvre, la durée pendant laquelle la valeur constante est prise est de $0,07.\pi$ valeur exprimée en radian, la référence étant l'angle électrique $\omega$t de la tension Ve=Vm sin($\omega$t). La durée correspondante exprimée en période est donc de 0,035 période, c'est-à-dire dans le cas d'une fréquence 50Hz : $(0,07.\pi)/(2.\pi.50)$=0,7 ms. A titre d'exemple de mise en oeuvre, la valeur constante prise est la première valeur, c'est à dire le seul milieu qui a une valeur de l'ordre de 80 A.

Avec cette nouvelle consigne, il apparaît sur la courbe 13 que le courant Id prend une valeur minimale (lors des phases de non commandabilité) bien supérieure à celle de la courbe 10. Cela est dû à la présence du palier dans la consigne qui bien qu'au cours d'une phase de non commandabilité permet d'éviter que la consigne ne fasse chuter d'avantage le courant traversant le composant inductif.

Outre ce point, la forme du courant Id illustré sur la courbe 13 est similaire à celle de la courbe 10. Le courant Id de la courbe 13 va ainsi atteindre une valeur minimale de 62,51 A et une valeur moyenne (illustrée sur la courbe 114) autour de 79,1 A comprise entre 79,03 et 79,19 A. La consigne de la courbe 12 permet donc de remonter un peu la valeur minimale du courant Id tout en conservant une valeur moyenne similaire voire inférieure (-0,7 A).

La consigne illustrée sur la courbe 12 permet donc d'obtenir une marge de sécurité de : 62,51 - 43 = 19,51 A qui est suffisante tout en permettant une baisse de la valeur moyenne du courant Id de l'ordre de 18% (79,1 A par rapport à 96,6 A).

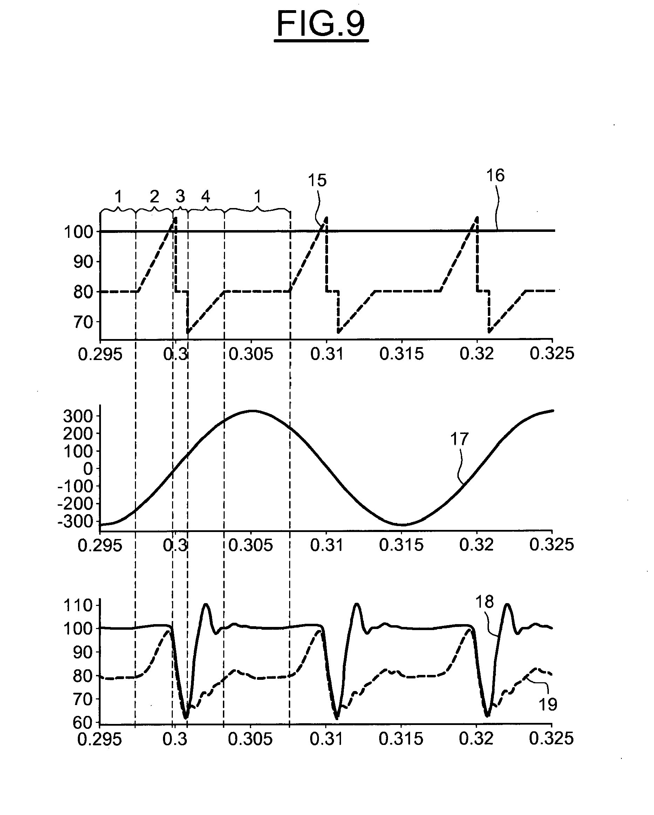

La figure 9 illustre la comparaison des variables du système de recharge en fonction de la consigne. La figure 9 montre trois repères comprenant chacun un axe horizontal représentant le temps en seconde et un axe vertical représentant respectivement le courant en Ampères, la tension en volts, et le courant en Ampères.

Les courbes 15 et 16 illustrées représentent respectivement l'intensité d'induction de consigne $Id^{ref}$ suivant la courbe 12 et l'intensité d'induction de consigne suivant une valeur constante $Id^{ref} = 100$. La courbe 17 illustré représente l'évolution de la tension Ve, en fonction des phases de non-commandabilité déjà illustrée sur la figure 4. Enfin les courbes 18 et 19 représentent respectivement le courant Id pour la consigne illustrée sur la courbe 16 et pour la consigne illustrée sur la courbe 15.

Sur cette figure 9 il apparaît que l'évolution des consignes $Id^{ref}$ des courbes 15 et 16 peut être découpée en quatre étapes.

Une première étape au cours de laquelle la consigne $Id^{ref}$ de la courbe 15 prend une valeur constante égale à la première valeur. Le courant Id de la courbe 18 peut ainsi être maintenu à une valeur plus basse que dans la régulation avec la consigne de la courbe 16. Cela se traduit par un rapport cyclique $a_s$ qui correspond à une transmission d'une partie plus importante du courant Id traversant le composant inductif (également appelé courant neutre) vers la batterie qu'avec la consigne de la courbe 16. En effet, la valeur moyenne du courant est plus proche du courant $I_{bat}$ tout en lui restant supérieure. On obtient donc une augmentation du rendement.

Une deuxième étape de montée de la consigne $Id^{ref}$ de la courbe 15 vers la deuxième valeur. Le courant Id de la courbe 18 suit la consigne et est ainsi augmenté afin d'anticiper la future perte de commandabilité (illustré par la courbe 17 qui se rapproche de la valeur nulle). La chute du courant Id se fera donc d'une valeur plus haute, ce qui permet également d'atteindre une valeur plus haute à l'issu de la chute.

Une troisième étape réalisée lors d'une phase de non commandabilité au cours de laquelle la consigne chute de la deuxième valeur vers une troisième valeur, ladite chute comprenant un palier au cours duquel la consigne garde une valeur constante (par exemple la première valeur).

Une quatrième étape au cours de laquelle la consigne de la courbe 15 remonte lentement de la troisième à la première valeur.

Toutes les solutions illustrées sur les figures 6 à 9 consistent à élaborer une consigne $Id^{ref}$ de manière qu'elle suive une courbe non constante. Elles sont mises en oeuvre à l'aide du module 31 qui va élaborer ladite consigne en fonction du courant Ie.

**Revendications**

1. Procédé de commande de charge d'une batterie (13), notamment d'une batterie d'un véhicule automobile, à partir d'un réseau monophasé, dans lequel :

   - on filtre la tension d'entrée (Ve) ;
   - on amène la puissance électrique du réseau à la batterie via un étage abaisseur de tension (3) et un étage élévateur de tension (4) couplés ensemble via un composant inductif (Ld); et
   - on contrôle une intensité (Id) traversant ledit composant inductif en fonction d'une consigne d'intensité (Id^{ref}), ladite intensité (Id) n'étant pas continûment commandable, la non commandabilité ayant lieu lorsque la tension d'entrée avoisine zéro,

   **caractérisé en ce qu'**on élabore la consigne d'intensité de manière que ladite consigne d'intensité ait au moins une première valeur et au moins une deuxième valeur supérieure à la première valeur, la consigne d'intensité ayant la deuxième valeur avant le début d'une phase au cours de laquelle l'intensité n'est pas commandable.

2. Procédé selon la revendication 1, dans lequel on élabore la consigne d'intensité ($Id^{ref}$) de manière que ladite consigne ait une troisième valeur, inférieure aux deux premières valeurs, la consigne passant de la deuxième à la troisième valeur lors d'une phase au cours de laquelle l'intensité n'est pas commandable.

3. Procédé selon la revendication 2, dans lequel on élabore la consigne d'intensité ($Id^{ref}$) de manière qu'après avoir eu la troisième valeur, la consigne ($Id^{ref}$) passe de la troisième à la première valeur en suivant une fonction affine croissante.

**4.** Procédé selon la revendication 2 ou 3, dans lequel on élabore la consigne d'intensité (Id$^{ref}$) de manière que lors du passage de la deuxième à la troisième valeur, la consigne d'intensité (Id$^{ref}$) prend une valeur constante pendant une certaine durée.

**5.** Procédé selon la revendication 4, dans lequel ladite valeur constante est égale à la première valeur.

**6.** Procédé selon l'une quelconque des revendications 1 à 5, dans lequel on crée un courant d'entrée (If) de l'étage abaisseur de tension (3) en phase avec la tension d'entrée (Vc) de l'étage abaisseur de tension (3).

**7.** Procédé selon la revendication 6, dans lequel on régule le courant d'entrée (If) de l'étage abaisseur de tension (3) en commandant en boucle ouverte un rapport cyclique (*a*) de hachage de l'étage abaisseur de tension (3) en fonction de la tension (Ve) du réseau d'alimentation monophasé, d'une puissance de consigne (P$_{bat}$$^{ref}$) et de l'intensité (Id) du courant traversant le composant inductif (Ld) pour mettre le courant d'entrée de l'étage abaisseur de tension en phase avec la tension d'entrée de l'étage abaisseur de tension, et asservir la puissance (P$_{bat}$) reçue par la batterie à la puissance de consigne (P$_{bat}$$^{ref}$).

**8.** Procédé selon l'une des revendication 6 ou 7, dans lequel on régule l'intensité (I$_{bat}$) du courant traversant la batterie (13) à une intensité de batterie de référence (I$_{bat}$$^{ref}$) en commandant en boucle fermée un rapport cyclique (*a$_s$*) de hachage de l'étage élévateur de tension (4) en fonction de la tension (Vkn) à la sortie de l'étage abaisseur de tension (3), de la tension (V$_{bat}$) de la batterie (13), et de la différence entre la consigne d'intensité (Id$^{ref}$) et l'intensité (Id) du courant traversant le composant inductif (Ld).

**9.** Procédé selon la revendication 8, dans lequel on désactive la partie intégrante d'un correcteur de type proportionnel intégral si le rapport cyclique (*a$_s$*) de hachage est égal, à une distance seuil près, des valeurs 0 ou 1.

**Patentansprüche**

**1.** Verfahren zur Ladesteuerung einer Batterie (13), insbesondere einer Batterie eines Kraftfahrzeugs, ausgehend von einem einphasigen Netz, wobei:

- die Eingangsspannung (Ve) gefiltert wird;
- die elektrische Leistung des Netzes über eine Spannungsminderungsstufe (3) und eine Spannungserhöhungsstufe (4) zur Batterie gebracht wird, die über ein induktives Bauteil (Ld) miteinander gekoppelt sind;
- eine das induktive Bauteil durchquerende Stromstärke (Id) abhängig von einem Stromstärke-Sollwert (Id$^{ref}$) kontrolliert wird, wobei die Stromstärke (Id) nicht durchgehend steuerbar ist, wobei die Nicht-Steuerbarkeit auftritt, wenn die Eingangsspannung nahe Null ist,

**dadurch gekennzeichnet, dass** der Stromstärke-Sollwert so erarbeitet wird, dass der Stromstärke-Sollwert mindestens einen ersten Wert und mindestens einen zweiten Wert höher als der erste Wert hat, wobei der Stromstärke-Sollwert den zweiten Wert vor dem Beginn einer Phase hat, während der die Stromstärke nicht steuerbar ist.

**2.** Verfahren nach Anspruch 1, wobei der Stromstärke-Sollwert (Id$^{ref}$) so erarbeitet wird, dass der Sollwert einen dritten Wert niedriger als die zwei ersten Werte hat, wobei der Sollwert in einer Phase vom zweiten zum dritten Wert übergeht, während der die Stromstärke nicht steuerbar ist.

**3.** Verfahren nach Anspruch 2, wobei der Stromstärke-Sollwert (Id$^{ref}$) so erarbeitet wird, dass, nachdem er den dritten Wert gehabt hat, der Sollwert (Id$^{ref}$) vom dritten zum ersten Wert übergeht, indem er einer zunehmenden affinen Funktion folgt.

**4.** Verfahren nach Anspruch 2 oder 3, wobei der Stromstärke-Sollwert (Id$^{ref}$) so erarbeitet wird, dass beim Übergang vom zweiten zum dritten Wert der Stromstärke-Sollwert (Id$^{ref}$) während einer bestimmten Dauer einen konstanten Wert annimmt.

**5.** Verfahren nach Anspruch 4, wobei der konstante Wert gleich dem ersten Wert ist.

**6.** Verfahren nach einem der Ansprüche 1 bis 5, wobei ein Eingangsstrom (If) der Spannungsminderungsstufe (3) in Phase mit der Eingangsspannung (Vc) der Spannungsminderungsstufe (3) erzeugt wird.

**7.** Verfahren nach Anspruch 6, wobei der Eingangsstrom (If) der Spannungsminderungsstufe (3) geregelt wird, indem ein Zerhackungs-Tastverhältnis ($\alpha$) der Spannungsminderungsstufe (3) abhängig von der Spannung (Ve) des einphasigen Versorgungsnetzes, einer Sollleistung ($P_{bat}{}^{ref}$) und der Stärke (Id) des das induktive Bauteil (Ld) durchquerenden Stroms in offener Schleife gesteuert wird, um den Eingangsstrom der Spannungsminderungsstufe mit der Eingangsspannung der Spannungsminderungsstufe abzugleichen und die von der Batterie empfangene Leistung ($P_{bat}$) auf die Sollleistung ($P_{bat}{}^{ref}$) zu regeln.

**8.** Verfahren nach einem der Ansprüche 6 oder 7, wobei die Stärke ($I_{bat}$) des die Batterie (13) durchquerenden Stroms auf eine Batterie-Bezugsstromstärke ($I_{bat}{}^{ref}$) geregelt wird, indem ein Zerhackungs-Tastverhältnis $\alpha_s$) der Spannungserhöhungsstufe (4) abhängig von der Spannung (Vkn) am Ausgang der Spannungsminderungsstufe (3), der Spannung ($V_{bat}$) der Batterie (13) und der Differenz zwischen dem Stromstärke-Sollwert ($Id^{ref}$) und der Stärke (Id) des das induktive Bauteil (Ld) durchquerenden Stroms in geschlossener Schleife gesteuert wird.

**9.** Verfahren nach Anspruch 8, wobei der Bestandteil eines Korrektors vom Proportional-Integral-Typ deaktiviert wird, wenn das Zerhackungs-Tastverhältnis ($\alpha_s$) bis auf einen Schwellenabstand gleich den Werten 0 oder 1 ist.

**Claims**

**1.** Method of controlling charging of a battery (13), particularly a battery of a motor vehicle, from a monophase network, wherein:

- the input voltage (Ve) is filtered;
- the electrical power of the network is supplied to the battery via a buck stage (3) and a boost stage (4) which are coupled together via an inductive component (Ld); and
- an intensity (Id) passing through said inductive component is monitored as a function of an intensity setpoint ($Id^{ref}$), said intensity (Id) not being continuously controllable, the non-controllability occurring when the input voltage is close to zero,

**characterized in that** the intensity setpoint is worked out in such a way that said intensity setpoint has at least a first value and at least a second value greater than the first value, the intensity setpoint having the second value before the start of a phase during which the intensity is not controllable.

**2.** Method according to Claim 1, wherein the intensity setpoint ($Id^{ref}$) is worked out such that said setpoint has a third value, which is less than the first two values, the setpoint moving from the second to the third value during a phase in which the intensity is not controllable.

**3.** Method according to Claim 2, wherein the intensity setpoint ($Id^{ref}$) is worked out such that, after having had the third value, the setpoint ($Id^{ref}$) moves from the third to the first value by following an increasing affine function.

**4.** Method according to Claim 2 or 3, wherein the intensity setpoint ($Id^{ref}$) is worked out such that, when moving from the second to the third value, the intensity setpoint ($Id^{ref}$) takes a constant value for a specific duration.

**5.** Method according to Claim 4, wherein said constant value is equal to the first value.

**6.** Method according to any one of Claims 1-5, wherein an input current (If) of the buck stage (3) is created in phase with the input voltage (Vc) of the buck stage (3).

**7.** Method according to Claim 6, wherein the input current (If) of the buck stage (3) is regulated by controlling, in open loop, a chopping duty cycle (*a*) of the buck stage (3) as a function of the voltage (Ve) of the monophase supply network, of a setpoint power ($P_{bat}{}^{ref}$) and of the intensity (Id) of the current passing through the inductive component (Ld) in order to phase the input current of the buck stage with the input voltage of the buck stage, and control the power ($P_{bat}$) received by the battery with respect to the setpoint power ($P_{bat}{}^{ref}$)

**8.** Method according to either of Claims 6 and 7, wherein the intensity ($I_{bat}$) of the current passing through the battery (13) is regulated with respect to a reference battery intensity ($I_{bat}{}^{ref}$) by controlling, in closed loop, a chopping duty cycle (*a_s*) of the boost stage (4) as a function of the voltage (VKn) at the output of the buck stage (3), of the voltage ($V_{bat}$) of the battery (13), and of the difference between the intensity setpoint ($Id^{ref}$) and the intensity (Id) of the

**EP 2 842 223 B1**

current passing through the inductive component (Ld).

9. Method according to Claim 8, wherein the integral part of a proportional integral controller is deactivated if the chopping duty cycle ($a_s$) is equal, within one threshold distance, to values 0 or 1.

**13**

FIG.1

## FIG.2a

## FIG.2b

## FIG.3

## FIG.4

# FIG.5

# FIG.6

# FIG.7

# FIG.8

# FIG.9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2943188